# EUROPEAN PATENT SPECIFICATION

(11) **EP 3 699 050 B1**
(45) Date of publication and mention of the grant of the patent: **26.07.2023**
(21) Application number: 18869251.1
(22) Date of filing: 12.10.2018
(51) Int. Cl.: B60W 30/12, B60W 50/02, G01B 11/275, G01M 13/00

(54) **CALIBRATION DEVICE FOR LANE KEEPING ASSIST SYSTEM**
KALIBRIERVORRICHTUNG FÜR SPURHALTEASSISTENZSYSTEM
DISPOSITIF D'ÉTALONNAGE POUR SYSTÈME D'ASSISTANCE DE SUIVI DE VOIE

(30) Priority: 20.10.2017 CN 201721365738 U
(43) Date of publication of application: 26.08.2020
(73) Proprietor: Autel Intelligent Technology Corp. Ltd., Shenzhen, Guangdong 518055 (CN)
(72) Inventor: QIU, Longxue, Shenzhen, Guangdong 518055 (CN); TANG, Xinguang, Shenzhen, Guangdong 518055 (CN); CHEN, Jin, Shenzhen, Guangdong 518055 (CN)
(74) Representative: Gulde & Partner
(86) International application number: PCT/CN2018/110083
(87) International publication number: WO 2019/076247

(56) References cited:
- CN-A- 106 405 526
- CN-A- 107 449 461
- CN-A- 107 678 004
- CN-A- 107 856 649
- CN-U- 207 631 229
- DE-A1-102015 112 368
- US-A1- 2015 134 191

## Description

### BACKGROUND

### Technical Field

The present application relates to the technical fields of automobile maintenance and device calibration, and in particular, to a calibration device for a lane keeping assist (LKA) system.

### Related Art

An LKA system is one of the advanced driver assist functions and mainly uses a sensor such as a vehicle-mounted camera to collect and analyze vehicle driving information (for example, a lane marking) in real time. When determining that a vehicle is about to leave a current lane, the LKA system performs intelligent control to keep the vehicle in the current lane, to assist a driver in driving the vehicle on a highway or in other monotonous road conditions, thereby reducing driving fatigue of the driver and improving driving safety of the vehicle. Different automobile manufacturers use different names for an LKA system. For example, some manufacturers call this function a lane departure warning system (LDWS).

An LKA system uses a series of vehicle-mounted sensors to obtain vehicle driving status information. Such sensors need to be mounted at appropriate angles and positions. However, during the use of a vehicle, the physical mounting states of the sensors may change due to vibration, collision, environmental temperature and humidity, and the like. Therefore, the function requires occasional alignment and calibration. Currently, in an alignment method for an LKA system used for various series of vehicles, a pattern board is placed in front of a vehicle to perform corresponding correction and sensor adjustment by using software. However, different patterns are adopted because different algorithms are used. At present, there is no universal calibration device for an LKA system.

In the related art, the document (Germany Patent Application Pub. No.: DE102015112368 A1) discloses a method and a device for calibrating assistance systems, preferably integrated into windscreens, of vehicles. The systems include a movable calibration wall and two wheel pickups which are each equipped with a laser. The calibration wall is positioned with an applied or printed-on calibration reference image at a defined distance parallel to the front of the vehicle, with the result that actual images of the calibration reference image are then captured by means of the assistance system and compared with a calibration reference image stored in the camera. The calibration is concluded when this comparison documents the necessary correspondence between the actual image and the reference image within the scope of the predefined tolerances.

The related art document (US Patent Application Pub. No.: US20150134191A1) discloses an inspection device for vehicle driver assistance systems (DASs) mounted on a vehicle may include a frame unit, a correction unit and an inspection unit. The frame unit includes pillar frames, where vehicles forwardly enter and backwardly exit, at respective corners of a base frame, and an upper frame is coupled to upper end portions of the pillar frames. The correction unit is installed at the upper frame such that it is movable in multi-axis directions so as to correct a camera measurement point of a lane departure warning system (LDWS) at a front side of the vehicle and configured to display a correction target with respect to the camera as an image. The inspection unit is installed at the upper frame such that it is movable in multi-axis directions so as to check a normal operation of the LDWS and configured to display a driving lane as an image.

### SUMMARY

To resolve the foregoing technical problem, embodiments of the present invention provide a calibration device for an LKA system applicable to different models of automobiles.

The technical problems in the embodiments of the present invention are resolved by adopting the following technical solution:
A calibration device for an LKA system includes a support apparatus, a laser and a pattern board. The support apparatus includes a horizontal graduated scale. The laser is configured to be mounted on the body of an automobile and to emit a laser beam to the horizontal graduated scale. The pattern board is mounted on the support apparatus and is configured to attach an alignment pattern. The pattern board is detachably mounted on the support apparatus and comprises an attaching board configured to attach the alignment pattern. The attaching board is a rectangular magnetic board, configured to attach a magnetic fabric having the alignment pattern by a magnetic attraction force.

Optionally, the support apparatus includes a guide rail, the horizontal graduated scale being disposed on the guide rail. The horizontal graduated scale separately extends towards two sides of the guide rail with the center of the guide rail being the origin.

Optionally, the calibration device includes a reflector and a diaphragm. The support apparatus includes a sliding member. The sliding member is movably mounted on the guide rail and is slidable along the guide rail. The horizontal graduated scale is configured to facilitate positioning of the sliding member. The reflector is mounted on the sliding member and is slidable together with the sliding member along the guide rail. The diaphragm is configured to control the laser beam to pass through the diaphragm. The reflector is configured to reflect the laser beam that passes through the diaphragm to the laser.

Optionally, the diaphragm is provided with a strip-shaped diaphragm slot, configured to control the laser beam to pass through the diaphragm.

Optionally, the diaphragm includes a fixing base and a sliding diaphragm. The sliding diaphragm is provided with the diaphragm slot. The sliding diaphragm is mounted on the fixing base. Positions of the sliding diaphragm and the fixing base are adjustable.

Optionally, the fixing base includes a base, a fixing support and a locking handle. An end of the fixing support is mounted on the base. The fixing support has a strip shape. The locking handle is mounted on the fixing support. The sliding diaphragm includes a diaphragm portion and a sliding slot portion. The diaphragm portion has a panel shape and is provided with the diaphragm slot. The sliding slot portion is mounted on the diaphragm portion, has a strip shape and is movably sleeved in the fixing support. The sliding slot portion is provided with a strip-shaped groove. The locking handle passes through the groove and is configured to fasten the sliding diaphragm to the fixing base.

Optionally, the laser includes an emitting portion, a mounting shaft and an observation target. The emitting portion is configured to emit the laser beam. The mounting shaft is mounted on the emitting portion and is configured to mount the laser on a wheel hub of the automobile. The observation target is mounted on the emitting portion. The observation target includes an observation target surface configured to display the position of the laser beam reflected back by the reflector. An emitting hole is provided in a middle part of the observation target surface.

Optionally, the support apparatus includes a support assembly and a beam assembly. The beam assembly is mounted on the support assembly and is movable in a vertical direction relative to the support assembly. The beam assembly includes the guide rail. The guide rail is horizontally disposed.

Optionally, the support assembly includes a support body and height adjustment members. At least three height adjustment members are mounted on a bottom surface of the support body. The at least three height adjustment members are configured to adjust an overall horizontal angle of the support body and a pitch angle of the support body.

Optionally, there are three height adjustment members. The three height adjustment members are distributed in an isosceles triangle and are configured to adjust the overall horizontal angle of the support body in cooperation. The height adjustment member located at the vertex position of the vertex angle of the isosceles triangle is configured to adjust the pitch angle of the support body.

Optionally, the support assembly includes a base support and an upright support. An end of the upright support is connected to the base support. The base support supports the upright support. The beam assembly is mounted on the upright support. The base support includes caster wheels, the support body and the height adjustment members. At least three caster wheels are mounted on the bottom surface of the support body and are configured to facilitate the movement of the base support.

Optionally, the upright support includes a lifting screw rod. The lifting screw rod is disposed in a vertical direction. The beam assembly is sleeved on the lifting screw rod and fits threads of the lifting screw rod. When the lifting screw rod rotates around the central axis of the lifting screw rod, the lifting screw rod may drive the beam assembly to move in a vertical direction along the lifting screw rod.

Optionally, the upright support includes a lifting guide rail. The lifting guide rail includes a vertical bar. The vertical bar is disposed in a vertical direction. The beam assembly is movably mounted on the vertical bar. The vertical bar is configured to guide the beam assembly to move in a vertical direction.

Optionally, the lifting guide rail includes a cross bar. The cross bar is mounted on the vertical bar in a horizontal direction. One end of the lifting screw rod is mounted on the cross bar. The other end of the lifting screw rod is mounted on the support body.

Optionally, the lifting guide rail includes a cross bar and a bottom bar. Two vertical bars are disposed at an interval in parallel in a vertical direction. The cross bar is disposed in a horizontal direction, two ends of the cross bar being respectively mounted on the two vertical bars. The bottom bar is fixedly mounted on the support body. An end, away from the cross bar, of each vertical bar is fixedly mounted on the bottom bar. One end of the lifting screw rod is fixedly mounted on the cross bar and the other end of the lifting screw rod is fixedly mounted on the bottom bar.

Optionally, the upright support includes a height gauge. The height gauge is mounted on the vertical bar in a vertical direction and is configured to measure a movement distance of the beam assembly in a vertical direction.

Optionally, the beam assembly includes a supporting member and the guide rail. The supporting member includes a supporting body and a movable block. The movable block is fixedly mounted on the supporting body and is sleeved on the lifting screw rod. The movable block fits the threads of the lifting screw rod. The guide rail is fixedly mounted on the supporting body in a horizontal direction. The sliding member is movably mounted on the guide rail and is movable along the guide rail in a horizontal direction.

Optionally, the upright support includes a vertical bar. The vertical bar is disposed in a vertical direction. The supporting member includes a slider. The slider is fixedly mounted on the supporting body. The slider is movably mounted on the vertical bar and is slidable along the vertical bar.

Optionally, two opposite sides of the supporting body extend to form two clamping portions respectively. The two clamping portions have a long strip shape and are disposed at an interval in parallel to each other in a horizontal direction. Two guide rails are respectively mounted on the two clamping portions and are disposed at an interval of a preset distance in parallel in a horizontal direction. The sliding member is movably mounted on the guide rails by using a sliding bearing.

Optionally, the beam assembly includes a horizontal bead. The horizontal bead is configured to detect whether the guide rail is disposed in a horizontal direction.

Compared with the prior art, by means of the calibration device in the embodiments of the present invention, two lasers are mounted on wheels on two sides of the automobile. Two laser beams that are emitted from equal distances with the wheels being reference points are irradiated to the horizontal graduated scale. Based on marks on the horizontal graduated scale, the support apparatus may be moved to an appropriate position to facilitate calibration of the centerline of the automobile. If the centerline of the automobile has been calibrated, a corresponding alignment pattern may be selected or changed based on the model of the automobile and attached on the pattern board, thereby facilitating calibration operations for an LKA system for different models of automobiles.

In addition, by means of the calibration device in the embodiments of the present invention, on one side of the automobile, the reflector is moved to an irradiation region of the laser on the side of the vehicle, so that a laser point can be reflected back into an incident direction of the laser point. The diaphragm is placed at a middle position between the laser and the reflector, so that an emergent laser beam can pass through the diaphragm slot to be irradiated to the reflector. Therefore, the laser point reflected by the reflector can return to an emergent point of the laser, thereby facilitating precise calibration of the centerline of the automobile. If the centerline of the automobile has been precisely calibrated, calibration operations for an LKA system can be more accurately implemented.

### BRIEF DESCRIPTION OF THE DRAWINGS

Exemplary descriptions of one or more embodiments are provided through accompanying drawings corresponding to the one or more embodiments. These exemplary descriptions do not constitute any limitation on the embodiments. Elements having identical reference numerals in the drawings represent similar elements. Unless particularly stated, figures in the accompanying drawings do not constitute any proportional limitation.
FIG. 1 is a perspective view of a calibration device for an LKA system according to an embodiment of the present invention;
FIG. 2 is a perspective view of a support apparatus of the calibration device shown in FIG. 1;
FIG. 3 is a perspective view of the support apparatus shown in FIG. 2 from another perspective;
FIG. 4 is a front view of the support apparatus shown in FIG. 2;
FIG. 5 is a perspective view of a diaphragm of the calibration device shown in FIG. 1;
FIG. 6 is a perspective view of the diaphragm shown in FIG. 5 from another perspective;
FIG. 7 is a perspective view of a laser of the calibration device shown in FIG. 1;
FIG. 8 is a perspective view of the laser shown in FIG. 7 from another perspective;
FIG. 9 is a perspective view of a pattern board of the calibration device shown in FIG. 1;
FIG. 10 to FIG. 12 are schematic diagrams of alignment patterns based on different requirements of various models of automobiles;
FIG. 13 is a schematic diagram of preliminarily calibrating the centerline of an automobile by using the calibration device shown in FIG. 1; and
FIG. 14 and FIG. 15 are schematic diagrams of precisely calibrating the centerline of an automobile and calibrating an LKA system by the calibration device shown in FIG. 1.

### DETAILED DESCRIPTION

For ease of understanding the present invention, the present invention is described in further detail below with reference to the accompanying drawings and specific embodiments. It should be noted that when an element is described as being "fixed" on another element, the element may be directly on the another element, or one or more intermediate elements may exist therebetween. When an element is described as being "connected" to another element, the element may be directly connected to the another element, or one or more intermediate elements may exist therebetween. The terms such as "perpendicular", "horizontal", "left", "right", "inner", "outer" and similar expressions used in this specification are merely used for the purpose of description.

Unless otherwise defined, meanings of all technical and scientific terms used in this specification are the same as those usually understood by persons skilled in the technical field to which the present invention belongs. The terms used in the specification of the present invention are merely intended to describe specific embodiments rather than limit the present invention. The term "and/or" used in this specification includes any or all combinations of one or more related listed items.

In addition, the related technical features in different embodiments of the present invention described below may be combined with each other provided that no conflict occurs therebetween.

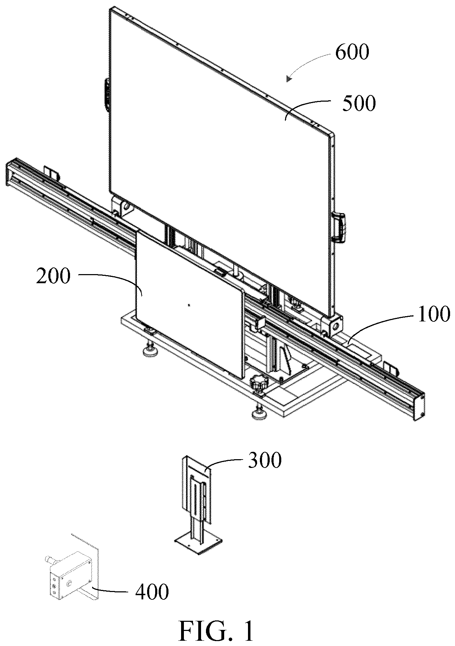

Referring to FIG. 1, a calibration device 600 for an LKA system provided by an embodiment of the present invention includes a support apparatus 100, a reflector 200, a diaphragm 300, a laser 400 and a pattern board 500. The reflector 200 is mounted on the support apparatus 100. The support apparatus 100 is configured to support the reflector 200. Under an external force, the reflector 200 is movable in a horizontal direction or move in a vertical direction. The laser 400 is configured to emit a laser beam. The diaphragm 300 is configured to prevent the laser beam from passing through the diaphragm 300 or to allow the laser beam to pass through the diaphragm 300. The reflector 200 is configured to reflect the laser beam that passes through the diaphragm 300 to the laser 400. The pattern board 500 is mounted on the support apparatus 100 and is configured to attach an alignment pattern of the LKA system.

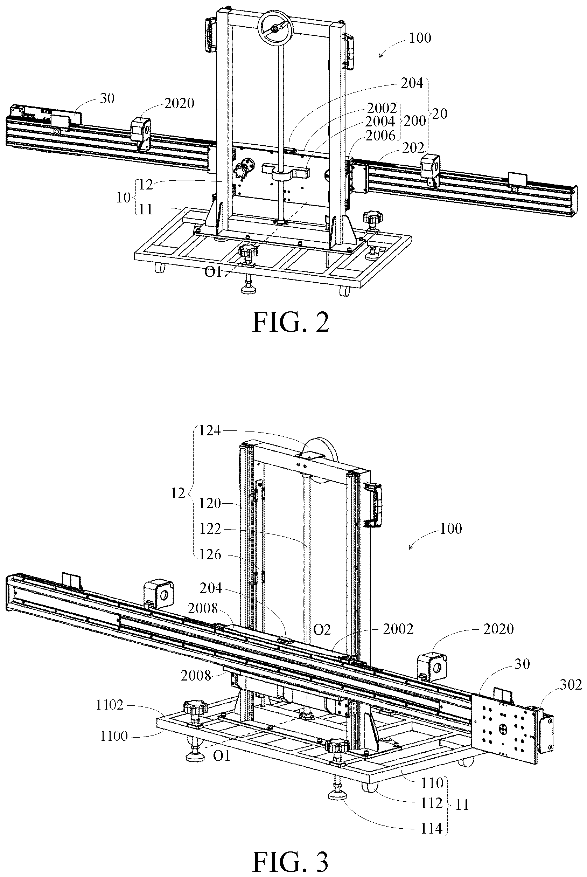

Referring to FIG. 2, the support apparatus 100 includes a support assembly 10, a beam assembly 20 and a sliding member 30. The beam assembly 20 is mounted on the support assembly 10 and is movable in a vertical direction relative to the support assembly 10. The sliding member 30 is mounted on the beam assembly 20 and is movable in a horizontal direction relative to the beam assembly 20. The reflector 200 is mounted on the sliding member 30 and is movable with the sliding member 30 in a horizontal direction relative to the beam assembly 20.

The support assembly 10 includes a base support 11 and an upright support 12. An end of the upright support 12 is connected to the base support 11. The base support 11 supports the upright support 12.

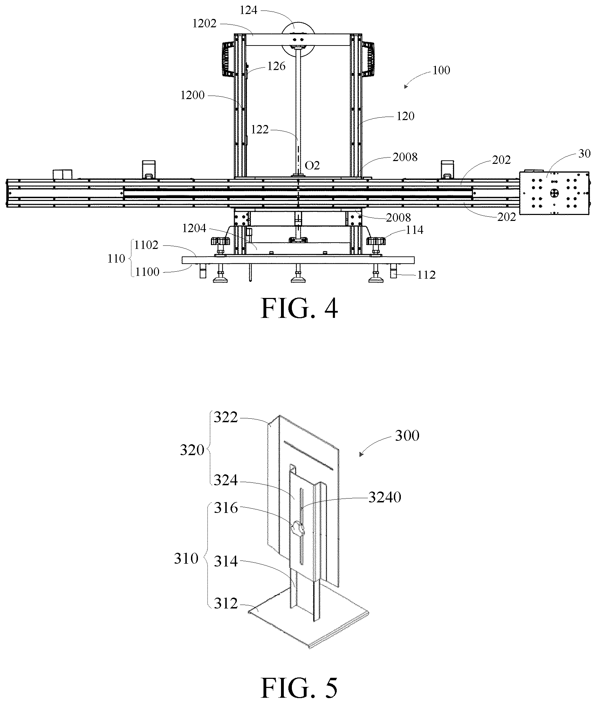

Referring to FIG. 3 and FIG. 4, the base support 11 includes a support body 110, caster wheels 112 and height adjustment members 114. The support body 110 is a rectangular board and may be made of a metal material. A plurality of hollowed-out regions are formed to reduce the weight. The support body 110 includes a bottom surface 1100 and a top surface 1102 that are oppositely disposed. The support body 110 is provided with the central axis O1.

The caster wheels 112 are mounted on the bottom surface 1100 and are configured to facilitate the movement of the base support 11. In this embodiment, the caster wheels 112 are universal caster wheels, so that the base support 11 may freely move in any direction. There are four caster wheels 112. The four caster wheels 112 are respectively mounted at four corners of the support body 110. It can be understood that in some other embodiments, the shape of the support body 110 may be changed according to an actual requirement and is not limited to a rectangle. For example, the support body 110 may be circular. There may be more or fewer caster wheels 112 according to an actual requirement, provided that there are at least three caster wheels 112.

The height adjustment members 114 are mounted on the bottom surface 1100 and are configured to adjust the height of the support body 110. In this embodiment, the height adjustment members 114 are three adjusting hand wheels. The three adjusting hand wheels 114 are distributed in an isosceles triangle. Two adjusting hand wheels 114 located at the base of the isosceles triangle are disposed on one side of the support body 110 and are symmetrically disposed about the central axis O1 of the support body 110. The other adjusting hand wheel 114 is disposed on the other side of the support body 110 and is disposed on the central axis O1 of the support body 110 (that is, disposed at the vertex position of the vertex angle of the isosceles triangle). The three adjusting hand wheels 114 may be used in cooperation to adjust an overall horizontal angle of the support body 110. A pitch angle of the support body 110 may be adjusted by separately adjusting the adjusting hand wheel 114 located on the central axis O1 of the support body 110.

It can be understood that the height adjustment members 114 may be other apparatuses that can be used to adjust a height. There may be more height adjustment members 114 according to an actual requirement, provided that there are at least three height adjustment members 114.

The upright support 12 includes a lifting guide rail 120, a lifting screw rod 122, an elevating crank handle 124 and a height gauge 126.

The lifting guide rail 120 is mounted on the support body 110 and includes a vertical bar 1200, a cross bar 1202 and a bottom bar 1204. Two vertical bars 1200 are disposed at an interval in parallel in a vertical direction and are configured to guide the beam assembly 20 to move in a vertical direction. The cross bar 1202 is disposed in a horizontal direction, two ends of the cross bar 1202 being respectively mounted on the two vertical bars 1200. The bottom bar 1204 is fixedly mounted on the support body 110. An end, away from the cross bar 1202, of each vertical bar 1200 is fixedly mounted on the bottom bar 1204.

It can be understood that in some other embodiments, there may be more or fewer vertical bars 1200 according to an actual case. For example, there may be one or more vertical bars 1200.

The lifting screw rod 122 is fixedly mounted on the lifting guide rail 120 in a vertical direction. One end of the lifting screw rod 122 is fixedly mounted on the cross bar 1202. The other end of the lifting screw rod 122 is fixedly mounted on the bottom bar 1204.

It can be understood that in some other embodiments, the bottom bar 1204 may be omitted. The end, away from the cross bar 1202, of each vertical bar 1200 is fixedly mounted on the support body 110. The lifting screw rod 122 is fixedly mounted on the lifting guide rail 120 in a vertical direction. One end of the lifting screw rod 122 is fixedly mounted on the cross bar 1202. The other end of the lifting screw rod 122 is fixedly mounted on the support body 110.

The elevating crank handle 124 is mounted on the cross bar 1202, is connected to the lifting screw rod 122 and is configured to rotate to drive the lifting screw rod 122 to rotate around the central axis of the lifting screw rod 122. In this embodiment, a connecting bar of the elevating crank handle 124 is perpendicular to the lifting screw rod 122 and connected to the lifting screw rod 122 through a gear structure. It can be understood that in some other embodiments, the connecting bar of the elevating crank handle 124 may be coaxial with the lifting screw rod 122. The connecting bar of the elevating crank handle 124 is directly connected to the lifting screw rod 122. Alternatively, the elevating crank handle 124 may be replaced with another apparatus configured to drive the lifting screw rod 122 to rotate. For example, a motor is adopted.

The height gauge 126 is mounted on the vertical bar 1200 in a vertical direction. The height gauge 126 is provided with marks and is configured to measure a movement distance of the beam assembly 20 in a vertical direction.

Referring to FIG. 2 and FIG. 3, the beam assembly 20 includes a supporting member 200, a guide rail 202 and a horizontal bead 204. The supporting member 200 is mounted on the lifting guide rail 120. Under guidance of the lifting guide rail 120, the supporting member 200 is movable in a vertical direction relative to the lifting guide rail 120. The guide rail 202 is fixedly mounted on the supporting member 200 and is movable together with the supporting member 200 in a vertical direction relative to the lifting guide rail 120. The sliding member 30 is mounted on the guide rail 202 and is movable in a horizontal direction relative to the guide rail 202.

The supporting member 200 includes a supporting body 2002, a movable block 2004 and a slider 2006.

The supporting body 2002 has approximately a panel shape, two opposite sides of the supporting body 2002 extending to form two clamping portions 2008 respectively. The two clamping portions 2008 have a long strip shape (referring to FIG. 3 and FIG. 4) and are disposed at an interval in parallel to each other in a horizontal direction.

The movable block 2004 is fixedly mounted on the supporting body 2002 and is sleeved on the lifting screw rod 122. The movable block 2004 fits threads of the lifting screw rod 122. When rotating around the central axis of the movable block 2004, the lifting screw rod 122 may drive the movable block 2004 to move along the lifting screw rod 122 in a vertical direction, thereby driving the beam assembly 20 to move in a vertical direction. The movable block 2004 and the clamping portions 2008 are respectively located on the two opposite sides of the supporting body 2002.

The slider 2006 is fixedly mounted on the supporting body 2002 and is located on the same side of the supporting body 2002 as the movable block 2004. At least one slider 2006 is correspondingly mounted on each vertical bar 1200. Each slider 2006 is movably mounted on the vertical bar 1200 corresponding to the slider 2006 and is slidable along the vertical bar 1200 corresponding to the slider 2006. In this embodiment, two sliders 2006 are correspondingly mounted on each vertical bar 1200. It can be understood that in some other embodiments, more or fewer sliders 2006 may be correspondingly mounted on each vertical bar 1200 according to an actual requirement. For example, one slider 2006 is mounted or three sliders 2006 are mounted.

Two guide rails 202 are respectively and correspondingly mounted on the two clamping portions 2008 and are disposed at an interval of a preset distance in parallel in a horizontal direction. A horizontal graduated scale 2020 separately extends towards two sides of the guide rail 202 with the center of the guide rail 202 being the origin and is configured to facilitate positioning of the sliding member 30. The central axis 02 of the guide rail 202 and the central axis O1 of the support body 110 are located in the same plane. It can be understood that in some other embodiments, there may be more or fewer guide rails 202 according to an actual requirement. For example, there is one guide rail 202 or there are three guide rails 202. The guide rails 202 may be fixedly mounted on the supporting member 200 in any other appropriate manner. For example, the clamping portions 2008 are omitted and the guide rails 202 are directly welded to the support body 110.

The horizontal bead 204 is mounted on an upper side of the clamping portions 2008 and is configured to detect whether the clamping portions 2008 are horizontally disposed, to determine whether the guide rails 202 are horizontally disposed. It can be understood that in some other embodiments, the horizontal bead 204 may be mounted on the guide rail 202 or may be mounted on another part of the beam assembly 20, provided that it can be detected whether the guide rails 202 are horizontally disposed.

The sliding member 30 is movably mounted on the guide rail 202 and is movable along the guide rail 202 in a horizontal direction. In this embodiment, the sliding member 30 is movably mounted on the guide rail 202 by using a sliding bearing 302. The sliding member 30 includes several mounting points, configured to mount the reflector 200. It can be understood that in some other embodiments, the sliding member 30 may be mounted on the guide rail 202 in another appropriate manner. For example, the sliding bearing 302 is omitted and the sliding member 30 is directly mounted on the guide rail 202.

Referring to FIG. 1 again, the reflector 200 is mounted on the mounting points. The reflector 200 has a rectangular panel shape, includes a reflective surface and is configured to reflect the laser beam that passes through the diaphragm 300 to the laser 400.

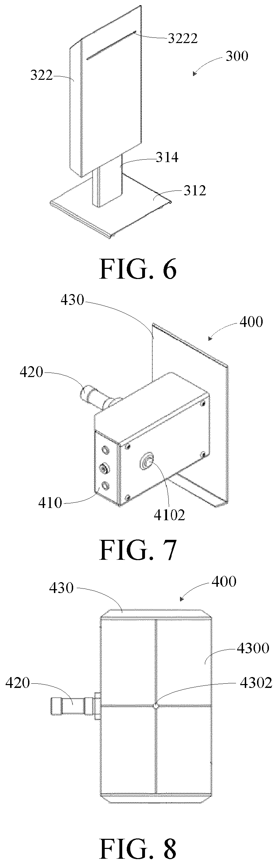

Referring to FIG. 5 and FIG. 6, the diaphragm 300 includes a fixing base 310 and a sliding diaphragm 320.

The fixing base 310 includes a base 312, a fixing support 314 and a locking handle 316. The base 312 is a rectangular board. An end of the fixing support 314 is mounted on a middle part of the base 312. The fixing support 314 is perpendicular to the base 312. The fixing support 314 has a strip shape. The locking handle 316 is mounted on the fixing support 314.

The sliding diaphragm 320 includes a diaphragm portion 322 and a sliding slot portion 324. The diaphragm portion 322 has approximately a panel shape and is provided with a strip-shaped diaphragm slot 3222 configured to allow a laser beam to pass through. The width of the diaphragm slot 3222 is slightly less than the diameter of a laser point emitted by the laser 400, so that it is convenient to detect whether the laser beam exactly passes through the diaphragm slot 3222. The sliding slot portion 324 is mounted on the diaphragm portion 322, has a strip shape and is sleeved on the fixing support 314. The sliding slot portion 324 is slidable relative to the fixing support 314. The sliding slot portion 324 is provided with a strip-shaped groove 3240. The locking handle 316 passes through the groove 3240 and is configured to stably fasten the sliding diaphragm 320 to the fixing base 310.

Referring to FIG. 7 and FIG. 8, the laser 400 is a wheel hub laser and includes an emitting portion 410, a mounting shaft 420 and an observation target 430. The emitting portion 410 is configured to emit the laser beam. The emitting portion 410 includes a switch 4102, configured to turn on or turn off the emitting portion 410. The mounting shaft 420 is mounted on the emitting portion 410 and is configured to mount the wheel hub laser 400 on a wheel hub of an automobile. The observation target 430 is mounted on the emitting portion 410. The observation target 430 is a rectangular board and includes an observation target surface 4300 configured to display the position of the laser reflected back by the reflector 200. An emitting hole 4302 is provided in a middle part of the observation target surface 4300 and is configured to allow the laser beam to be emitted outside.

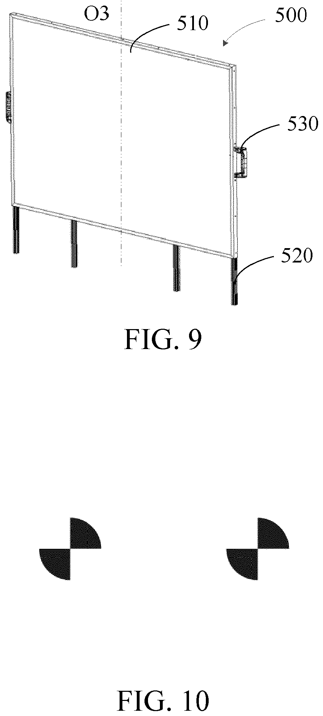

Referring to FIG. 9, the pattern board 500 includes an attaching board 510, fixing feet 520 and handles 530. The attaching board 510 is a rectangular magnetic board. Four fixing feet 520 are mounted on one side of the attaching board 510. The fixing feet 520 are configured to be inserted into mounting holes of the beam assembly 20, to mount the pattern board 500 on the beam assembly 20. The handles 530 are mounted on other two opposite sides of the attaching board 510, making it convenient to mount the pattern board 500 on the beam assembly 20 or remove the pattern board 500 from the beam assembly 20. When the pattern board 500 is mounted on the pattern board 500, the central axis O3 of the pattern board 500, the central axis O2 of the guide rail 202 and the central axis O1 of the support body 110 are located in the same plane.

FIG. 10 to FIG. 12 show alignment patterns satisfying different requirements of various models of automobiles. These alignment patterns may be printed on a magnetic fabric surface whose size is the same as the size of the attaching board 510, to form magnetic fabrics having the alignment patterns, making it convenient to change alignment patterns for different models of automobiles and align an LKA system.

It can be understood that in some other embodiments, the attaching board 510 is not limited to a rectangular magnetic board. For example, the attaching board 510 may be a normal board. The alignment pattern may be printed on paper. The paper is bonded to the attaching board 510 or attached on the attaching board 510 in other appropriate manners.

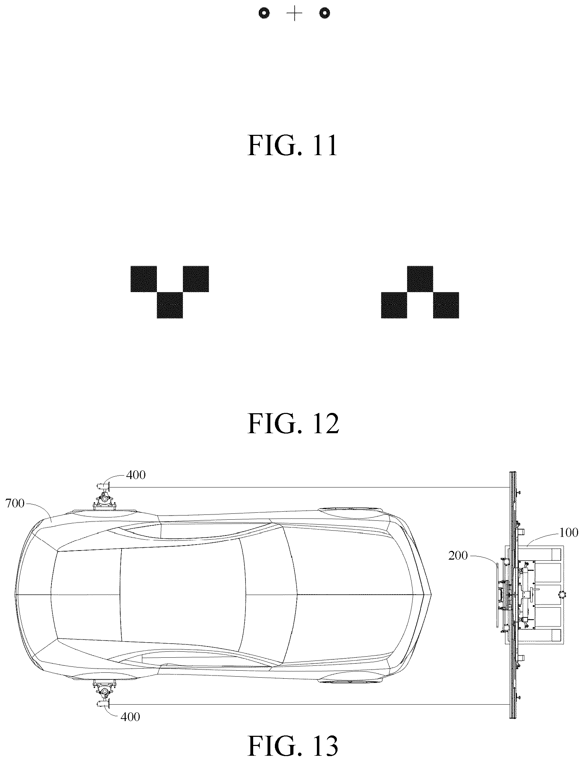

Referring to FIG. 13, in the first step, the support apparatus 100 is moved in front of an automobile 700 on the caster wheels 112. Based on a distance parameter required for an LKA system for the model of an automobile, the pattern board 500 is adjusted to a corresponding position of the front of the to-be-calibrated automobile 700. The reflector 200 is mounted on the sliding member 30, so that the guide rail 202 is parallel to the axle of the to-be-calibrated automobile 700. Wheel hub clamps are respectively mounted to the rear wheels of the to-be-calibrated automobile 700. Lasers 400 are respectively mounted and turned on and separately emit laser beams towards two ends of the guide rail 202. Angles of the lasers 400 are adjusted, so that laser points fall on the horizontal graduated scale 2020 on the two ends of the guide rail 202. Readings at the laser points on the two sides are recorded. If the readings are consistent, the central axis O2 of the guide rail 202 is located on the centerline of the to-be-calibrated automobile 700. If the readings are not consistent, the support apparatus 100 is moved transversely until the readings are consistent. At this time, the centerline is only preliminarily aligned. A particular angle difference exists between the guide rail 202 and the axle and cannot be completely eliminated by using the foregoing method. Therefore, the centerline of the to-be-calibrated automobile 700 needs to be further precisely calibrated.

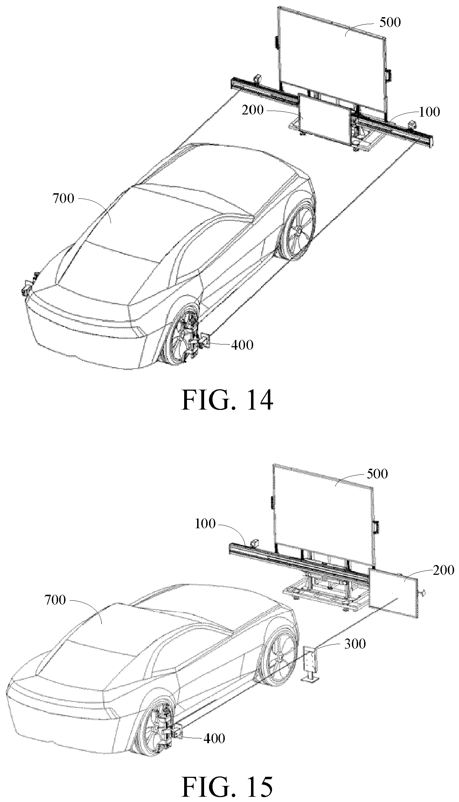

Referring to FIG. 14 and FIG. 15, in the second step, the reflector 200 is moved to an end of the guide rail 202, so that the laser on the side can be irradiated to the reflective surface of the reflector 200. The diaphragm 300 is chosen and placed at a middle position between the laser 400 and the reflector 200. The diaphragm portion 322 is placed to be perpendicular to the laser beam. The diaphragm slot 3222 is adjusted to have the same height as the emitting hole 4302 of the laser 400. An emergent angle of the laser 400 is adjusted and the position of the diaphragm 300 is appropriately moved, so that the laser beam can pass through the very center of the diaphragm slot 3222. The position of the reflector 200 is adjusted according to an actual case, so that the laser beam at this time can be irradiated to the reflector 200. The positions of the laser points that are reflected back are observed. The height adjustment members 114 are adjusted to enable the laser beam reflected by the reflector 200 to exactly return along the original path to be projected to the emitting hole 4302 of the laser 400.

After the foregoing steps are completed, the reflector 200 is moved to the center of the guide rail 202. It is examined again whether projection marks of the lasers 400 on two sides on the guide rail 202 are consistent. If the projection marks are consistent, it indicates that both the centerline and a vertical plane of the to-be-calibrated automobile 700 have been calibrated. If the projection marks are not consistent, the second step needs to be repeated.

After the centerline of the to-be-calibrated automobile 700 has been calibrated, the central axis O3 of the pattern board 500, the central axis O2 of the guide rail 202 and the central axis O1 of the support body 110 and the centerline of the body of the automobile 700 are located in the same plane. Based on the model of an automobile, a magnetic fabric having an alignment pattern corresponding to the model is magnetically attached to the attaching board 510. It is ensured that the alignment pattern is mounted correctly, with four corners being aligned. Next, calibration work for an LKA system is completed for the automobile according to the requirements of the model of the automobile.

It can be understood that in some other embodiments, the support apparatus 100 may be placed at the rear of the to-be-calibrated automobile 700. The two lasers 400 are mounted on two front wheels of the to-be-calibrated automobile 700. The centerline of the to-be-calibrated automobile 700 can also be calibrated from the rear of the to-be-calibrated automobile 700. Alternatively, the support apparatus 100 may be placed at the front or rear of the to-be-calibrated automobile 700. The two lasers 400 are mounted at two positions that are symmetrical about the centerline of the to-be-calibrated automobile 700. The centerline of the to-be-calibrated automobile 700 can also be calibrated from the front or the rear of the to-be-calibrated automobile 700.

Compared with the prior art, by means of the calibration device 600 in this embodiment of the present invention, the two lasers 400 are mounted on wheels on two sides of the to-be-calibrated automobile 700. Two laser beams that are emitted from equal distances with the wheels being reference points are irradiated to the horizontal graduated scale 2020 of the guide rail 202. Based on the marks on the horizontal graduated scale 2020, the guide rail 202 may be moved to an appropriate position, so that readings at positions irradiated by the lasers on two sides are consistent, thereby facilitating precise calibration of the centerline of the to-be-calibrated automobile 700.

In addition, on one side of the to-be-calibrated automobile 700, the reflector 200 is moved to an irradiation region of the laser 400 on the side, so that a laser point can be reflected back into an incident direction of the laser point. The diaphragm 300 is placed at a middle position between the laser 400 and the reflector 200. The diaphragm portion 322 is placed to be perpendicular to the laser beam. The height of the diaphragm slot 3222 is adjusted to be equal to the height of the laser 400. First, an emergent angle of the laser 400 is adjusted, so that an emergent laser beam can pass through the diaphragm slot 3222 to be irradiated to the reflector 200. The height adjustment members 114 are adjusted, so that the laser point reflected by the reflector 200 can return to an emergent point of the laser 400, thereby facilitating precise calibration of the centerline of the to-be-calibrated automobile 700.

If the centerline of the automobile has been calibrated, a corresponding alignment pattern may be selected or changed based on the model of the automobile and attached on the pattern board 500, thereby facilitating calibration operations for an LKA system for different models of automobiles.

Finally, it should be noted that the above embodiments are merely provided for describing the technical solutions of the present invention, but not intended to limit the present invention. In the concept of the present invention, in the foregoing embodiments or different embodiments, technical features may be combined, steps may be implemented in any sequence, and many another variations in different aspects of the present invention may exist. For brevity, these are not provided in the details. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the scope of the present invention as defined by the claims.

## Claims

1. A calibration device (600) for a lane keeping assist system, comprising:
a support apparatus (100), wherein the support apparatus (100) comprises a horizontal graduated scale (2020);
a laser (400), wherein the laser (400) is configured to be mounted on the body of an automobile (700) and to emit a laser beam to the horizontal graduated scale (2020); and
a pattern board (500), wherein the pattern board (500) is mounted on the support apparatus (100) and is configured to attach an alignment pattern, wherein
the pattern board (500) is detachably mounted on the support apparatus (100) and comprises an attaching board (510) configured to attach the alignment pattern;
**characterized in that**
the attaching board (510) is a rectangular magnetic board, configured to attach a magnetic fabric having the alignment pattern by a magnetic attraction force.

2. The calibration device (600) according to claim 1, wherein the support apparatus (100) comprises a guide rail (202), the horizontal graduated scale (2020) being disposed on the guide rail (202), and the horizontal graduated scale (2020) separately extending towards two sides of the guide rail (202) with the center of the guide rail (202) being the origin.

3. The calibration device (600) according to claim 2, comprising a reflector (200) and a diaphragm (300), wherein
the support apparatus (100) comprises a sliding member (30), the sliding member (30) being movably mounted on the guide rail (202) and being slidable along the guide rail (202), and the horizontal graduated scale (2020) being configured to facilitate positioning of the sliding member (30);
the reflector (200) is mounted on the sliding member (30) and is slidable together with the sliding member (30) along the guide rail (202); and
the diaphragm (300) is configured to control the laser beam to pass through the diaphragm (300), the reflector (200) being configured to reflect the laser beam that passes through the diaphragm (300) to the laser (400).

4. The calibration device (600) according to claim 3, wherein the diaphragm (300) is provided with a strip-shaped diaphragm slot (3222), configured to control the laser beam to pass through the diaphragm (300).

5. The calibration device (600) according to claim 4, wherein the diaphragm (300) comprises a fixing base (310) and a sliding diaphragm (320), the sliding diaphragm (320) being provided with the diaphragm (300) slot and being mounted on the fixing base (310), and positions of the sliding diaphragm (320) and the fixing base (310) being adjustable.

6. The calibration device (600) according to claim 5, wherein the fixing base (310) comprises a base (312), a fixing support (314) and a locking handle (316);
an end of the fixing support (314) is mounted on the base (312), the fixing support (314) having a strip shape, and the locking handle (316) being mounted on the fixing support (314);
the sliding diaphragm (320) comprises a diaphragm portion (322) and a sliding slot portion (324); and
the diaphragm portion (322) has a panel shape and is provided with the diaphragm slot (3222), the sliding slot portion (324) being mounted on the diaphragm portion (322), having a strip shape and being movably sleeved in the fixing support (314), the sliding slot portion (324) being provided with a strip-shaped groove (3240), and the locking handle (316) passing through the groove (3240) and being configured to fasten the sliding diaphragm (320) to the fixing base (310).

7. The calibration device (600) according to claim 1, wherein the laser (400) comprises an emitting portion (410), a mounting shaft (420) and an observation target (430);
the emitting portion (410) is configured to emit the laser beam;
the mounting shaft (420) is mounted on the emitting portion (410) and is configured to mount the laser (400) on a wheel hub of the automobile (700); and
the observation target (430) is mounted on the emitting portion (410), the observation target (430) comprising an observation target surface (4300) configured to display the position of the laser beam reflected back by the reflector (200), and an emitting hole (4302) being provided at a middle part of the observation target surface (4300).

8. The calibration device (600) according to claim 3, wherein the support apparatus (100) comprises:
a support assembly (10); and
a beam assembly (20), wherein the beam assembly (20) is mounted on the support assembly (10) and is movable in a vertical direction relative to the support assembly (10), the beam assembly (20) comprising the guide rail (202), the guide rail (202) being horizontally disposed.

9. The calibration device (600) according to claim 8, wherein the support assembly (10) comprises a support body (110) and height adjustment members (114), wherein
at least three height adjustment members (114) are mounted on a bottom surface (1110) of the support body (110), the at least three height adjustment members (114) being configured to adjust an overall horizontal angle of the support body (110) and a pitch angle of the support body (110).

10. The calibration device (600) according to claim 9, wherein there are three height adjustment members (114), the three height adjustment members (114) being distributed in an isosceles triangle and being configured to adjust the overall horizontal angle of the support body (110) in cooperation, and a height adjustment member (114) located at the vertex position of the vertex angle of the isosceles triangle being configured to adjust the pitch angle of the support body (110).

11. The calibration device (600) according to claim 9, wherein the support assembly (10) comprises a base support (11) and an upright support (12), an end of the upright support (12) being connected to the base support (11), and the base support (11) supporting the upright support (12);
the beam assembly (20) is mounted on the upright support (12);
the base support (11) comprises caster wheels (112), the support body (110) and the height adjustment members (114); and
at least three caster wheels (112) are mounted on the bottom surface (1110) of the support body (110) and are configured to facilitate the movement of the base support (11).

12. The calibration device (600) according to claim 11, wherein the upright support (12) comprises a lifting screw rod (122);
the lifting screw rod (122) is disposed in a vertical direction; and
the beam assembly (20) is sleeved on the lifting screw rod (122) and fits threads of the lifting screw rod (122), when rotating around the central axis of the lifting screw rod (122), the lifting screw rod (122) being capable of driving the beam assembly (20) to move along the lifting screw rod (122) in a vertical direction.

13. The calibration device (600) according to claim 12, wherein the upright support (12) comprises a lifting guide rail (202);
the lifting guide rail (202) comprises a vertical bar (1200), the vertical bar (1200) being disposed in a vertical direction; and
the beam assembly (20) is movably mounted on the vertical bar (1200), the vertical bar (1200) being configured to guide the beam assembly (20) to move in a vertical direction.

14. The calibration device (600) according to claim 13, wherein the lifting guide rail (202) comprises a cross bar (1202), the cross bar (1202) being mounted on the vertical bar (1200) in a horizontal direction; and
one end of the lifting screw rod (122) is mounted on the cross bar (1202) and the other end of the lifting screw rod (122) is mounted on the support body (110).

15. The calibration device (600) according to claim 13, wherein the lifting guide rail (202) comprises a cross bar (1202) and a bottom bar (1204);
two vertical bars (1200) are disposed at an interval in a vertical direction in parallel;
the cross bar (1202) is disposed in a horizontal direction, two ends of which being respectively mounted on the two vertical bars (1200);
the bottom bar (1204) is fixedly mounted on the support body (110), an end, away from the cross bar (1202), of each vertical bar (1200) being fixedly mounted on the bottom bar (1204); and
one end of the lifting screw rod (122) is fixedly mounted on the cross bar (1202) and the other end of the lifting screw rod (122) is fixedly mounted on the bottom bar (1204).

## Patentansprüche

1. Kalibrierungsvorrichtung (600) für ein Spurhalteassistenzsystem, umfassend:
eine Stützvorrichtung (100), wobei die Stützvorrichtung (100) eine horizontale Gradskala (2020) umfasst;
einen Laser (400), wobei der Laser (400) so konfiguriert ist, dass er an der Karosserie eines Kraftfahrzeugs (700) angebracht wird und einen Laserstrahl auf die horizontale Gradskala (2020) aussendet; und
eine Musterplatte (500), wobei die Musterplatte (500) an der Stützvorrichtung (100) angebracht ist und so konfiguriert ist, dass sie ein Ausrichtungsmuster befestigt, wobei
die Musterplatte (500) abnehmbar an der Stützvorrichtung (100) angebracht ist und eine Befestigungsplatte (510) umfasst, die zum Befestigen des Ausrichtungsmusters konfiguriert ist; **dadurch gekennzeichnet, dass**
die Befestigungsplatte (510) eine rechteckige Magnetplatte ist, die so konfiguriert ist, dass sie ein magnetisches Gewebe mit dem Ausrichtungsmuster durch eine magnetische Anziehungskraft befestigt.

2. Kalibrierungsvorrichtung (600) nach Anspruch 1, wobei die Stützvorrichtung (100) eine Führungsschiene (202) umfasst, wobei die horizontale Gradskala (2020) auf der Führungsschiene (202) angeordnet ist und sich die horizontale Gradskala (2020) getrennt zu zwei Seiten der Führungsschiene (202) erstreckt, wobei die Mitte der Führungsschiene (202) der Ursprung ist.

3. Kalibrierungsvorrichtung (600) nach Anspruch 2, umfassend einen Reflektor (200) und eine Blende (300), wobei
die Stützvorrichtung (100) ein Gleitelement (30) umfasst, wobei das Gleitelement (30) beweglich an der Führungsschiene (202) angebracht und entlang der Führungsschiene (202) verschiebbar ist, und die horizontale Gradskala (2020) so konfiguriert ist, dass sie die Positionierung des Gleitelements (30) erleichtert;
der Reflektor (200) auf dem Gleitelement (30) montiert ist und zusammen mit dem Gleitelement (30) entlang der Führungsschiene (202) verschiebbar ist; und
die Blende (300) so konfiguriert ist, dass sie den Laserstrahl so steuert, dass er durch die Blende (300) hindurchgeht, wobei der Reflektor (200) so konfiguriert ist, dass er den Laserstrahl, der durch die Blende (300) hindurchgeht, zu dem Laser (400) reflektiert.

4. Kalibrierungsvorrichtung (600) nach Anspruch 3, wobei die Blende (300) mit einem streifenförmigen Blendenschlitz (3222) versehen ist, der so konfiguriert ist, dass er den Laserstrahl so steuert, dass er durch die Blende (300) hindurchgeht.

5. Kalibrierungsvorrichtung (600) nach Anspruch 4, wobei die Blende (300) einen Befestigungssockel (310) und eine Gleitblende (320) umfasst, wobei die Gleitblende (320) mit dem Schlitz der Blende (300) versehen ist und auf dem Befestigungssockel (310) montiert ist und die Positionen der Gleitblende (320) und des Befestigungssockels (310) einstellbar sind.

6. Kalibrierungsvorrichtung (600) nach Anspruch 5, wobei der Befestigungssockel (310) eine Basis (312), einen Befestigungsträger (314) und einen Verriegelungsgriff (316) umfasst;
ein Ende des Befestigungsträgers (314) an der Basis (312) angebracht ist, wobei der Befestigungsträger (314) eine Streifenform aufweist, und der Verriegelungsgriff (316) an dem Befestigungsträger (314) angebracht ist;
die Gleitblende (320) einen Blendenabschnitt (322) und einen Gleitschlitzabschnitt (324) umfasst; und
der Blendenabschnitt (322) eine Plattenform hat und mit dem Blendenschlitz (3222) versehen ist, wobei der Gleitschlitzabschnitt (324) auf dem Blendenabschnitt (322) angebracht ist, eine Streifenform hat und beweglich in den Befestigungsträger (314) eingeschoben ist, wobei der Gleitschlitzabschnitt (324) mit einer streifenförmigen Nut (3240) versehen ist und der Verriegelungsgriff (316) durch die Nut (3240) hindurchgeht und so konfiguriert ist, dass er die Gleitblende (320) am Befestigungssockel (310) befestigt.

7. Kalibrierungsvorrichtung (600) nach Anspruch 1, wobei der Laser (400) einen emittierenden Abschnitt (410), eine Befestigungswelle (420) und ein Beobachtungsziel (430) umfasst;
der emittierende Abschnitt (410) so konfiguriert ist, dass er den Laserstrahl emittiert;
die Befestigungswelle (420) an dem emittierenden Abschnitt (410) befestigt ist und so konfiguriert ist, dass sie den Laser (400) an einer Radnabe des Automobils (700) befestigt; und
das Beobachtungsziel (430) an dem emittierenden Abschnitt (410) angebracht ist, wobei das Beobachtungsziel (430) eine Beobachtungszielfläche (4300) umfasst, die so konfiguriert ist, dass sie die Position des von dem Reflektor (200) zurückreflektierten Laserstrahls anzeigt, und ein emittierendes Loch (4302) in einem mittleren Teil der Beobachtungszielfläche (4300) vorgesehen ist.

8. Kalibrierungsvorrichtung (600) nach Anspruch 3, wobei die Stützvorrichtung (100) umfasst:
eine Stützanordnung (10); und
eine Trägeranordnung (20), wobei die Trägeranordnung (20) an der Stützanordnung (10) angebracht und in einer vertikalen Richtung relativ zu der Stützanordnung(10) bewegbar ist, wobei die Trägeranordnung (20) die Führungsschiene (202) umfasst, wobei die Führungsschiene (202) horizontal angeordnet ist.

9. Kalibrierungsvorrichtung (600) nach Anspruch 8, wobei die Stützanordnung (10) einen Stützkörper (110) und Höheneinstellelemente (114) umfasst, wobei
mindestens drei Höheneinstellelemente (114) an einer Bodenfläche (1110) des Stützkörpers (110) angebracht sind, wobei die mindestens drei Höheneinstellelemente (114) so konfiguriert sind, dass sie einen horizontalen Gesamtwinkel des Stützkörpers (110) und einen Neigungswinkel des Stützkörpers (110) einstellen.

10. Kalibrierungsvorrichtung (600) nach Anspruch 9, wobei es drei Höheneinstellelemente (114) gibt, wobei die drei Höheneinstellelemente (114) in einem gleichschenkligen Dreieck verteilt sind und so konfiguriert sind, dass sie den horizontalen Gesamtwinkel des Stützkörpers (110) in Zusammenarbeit einstellen, und ein Höheneinstellelement (114), das sich an der Scheitelposition des Scheitelwinkels des gleichschenkligen Dreiecks befindet, so konfiguriert ist, dass es den Neigungswinkel des Stützkörpers (110) einstellt.

11. Kalibrierungsvorrichtung (600) nach Anspruch 9, wobei die Stützanordnung (10) eine Basisstütze (11) und eine aufrechte Stütze (12) umfasst, wobei ein Ende der aufrechten Stütze (12) mit der Basisstütze (11) verbunden ist und die Basisstütze (11) die aufrechte Stütze (12) stützt;
die Trägeranordnung (20) an der aufrechten Stütze (12) befestigt ist;
die Basisstütze (11) Lenkrollen (112), den Stützkörper (110) und die Höheneinstellungselemente (114) umfasst; und
mindestens drei Lenkrollen (112) an der Bodenfläche (1110) des Stützkörpers (110) angebracht und so konfiguriert sind, dass sie die Bewegung der Basisstütze (11) erleichtern.

12. Kalibrierungsvorrichtung (600) nach Anspruch 11, wobei die aufrechte Stütze (12) eine Hebegewindestange (122) umfasst;
die Hebegewindestange (122) in vertikaler Richtung angeordnet ist; und
die Trägeranordnung (20) auf der Hebegewindestange (122) gelagert ist und in die Gewinde der Hebegewindestange (122) passt, wenn sie sich um die Mittelachse der Hebegewindestange (122) dreht, wobei die Hebegewindestange (122) in der Lage ist, die Trägeranordnung (20) anzutreiben, um sich entlang der Hebegewindestange (122) in vertikaler Richtung zu bewegen.

13. Kalibrierungsvorrichtung (600) nach Anspruch 12, wobei die aufrechte Stütze (12) eine Hebeführungsschiene (202) umfasst;
die Hebeführungsschiene (202) eine vertikale Stange (1200) umfasst, wobei die vertikale Stange (1200) in einer vertikalen Richtung angeordnet ist; und
die Trägeranordnung (20) beweglich an der vertikalen Stange (1200) angebracht ist, wobei die vertikale Stange (1200) so konfiguriert ist, dass sie die Trägeranordnung (20) so führt, dass sie sich in vertikaler Richtung bewegt.

14. Kalibrierungsvorrichtung (600) nach Anspruch 13, wobei die Hebeführungsschiene (202) eine Querstange (1202) umfasst, wobei die Querstange (1202) an der vertikalen Stange (1200) in einer horizontalen Richtung angebracht ist; und
ein Ende der Hebegewindestange (122) auf der Querstange (1202) montiert ist und das andere Ende der Hebegewindestange (122) auf dem Stützkörper (110) montiert ist.

15. Kalibrierungsvorrichtung (600) nach Anspruch 13, wobei die Hebeführungsschiene (202) eine Querstange (1202) und eine untere Stange (1204) umfasst;
zwei vertikale Stangen (1200) in einem Abstand in vertikaler Richtung parallel angeordnet sind;
die Querstange (1202) in horizontaler Richtung angeordnet ist, wobei ihre beiden Enden jeweils an den beiden vertikalen Stangen (1200) befestigt sind;
die untere Stange (1204) fest an dem Stützkörper (110) angebracht ist, wobei ein von der Querstange (1202) entferntes Ende jeder vertikalen Stange (1200) fest an der unteren Stange (1204) angebracht ist; und
ein Ende der Hebegewindestange (122) fest an der Querstange (1202) angebracht ist und das andere Ende der Hebegewindestange (122) fest an der unteren Stange (1204) angebracht ist.

## Revendications

1. Dispositif d'étalonnage (600) pour un système d'assistance au maintien de voie , comprenant :
un dispositif de support (100), dans lequel le dispositif de support (100) comprend une échelle graduée horizontale (2020) ;
un laser (400), dans lequel le laser (400) est configuré pour être monté sur la carrosserie d'une automobile (700) et pour émettre un faisceau laser vers l'échelle graduée horizontale (2020) ; et
un panneau de motif (500), dans laquelle le panneau de motif (500) est monté sur le dispositif de support (100) et est configurée pour fixer un motif d'alignement, dans lequel
le panneau de motif (500) est montée de manière amovible sur le dispositif de support (100) et comprend un panneau de fixation (510) configuré pour fixer le motif d'alignement ; **caractérisé en ce que**
le panneau de fixation (510) est un panneau magnétique rectangulaire, configuré pour fixer un tissu magnétique présentant le motif d'alignement par une force d'attraction magnétique.

2. Dispositif d'étalonnage (600) selon la revendication 1, dans lequel le dispositif de support (100) comprend un rail de guidage (202), l'échelle graduée horizontale (2020) étant disposée sur le rail de guidage (202), et l'échelle graduée horizontale (2020) s'étendant séparément vers deux côtés du rail de guidage (202), le centre du rail de guidage (202) étant l'origine.

3. Dispositif d'étalonnage (600) selon la revendication 2, comprenant un réflecteur (200) et un diaphragme (300), dans lequel
le dispositif de support (100) comprend un élément coulissant (30), l'élément coulissant (30) étant monté de manière mobile sur le rail de guidage (202) et pouvant coulisser le long du rail de guidage (202), et l'échelle graduée horizontale (2020) étant configurée pour faciliter le positionnement de l'élément coulissant (30) ;
le réflecteur (200) est monté sur l'élément coulissant (30) et peut coulisser avec l'élément coulissant (30) le long du rail de guidage (202) ; et
le diaphragme (300) est configuré pour commander le passage du faisceau laser à travers le diaphragme (300), le réflecteur (200) étant configuré pour réfléchir le faisceau laser qui passe à travers le diaphragme (300) vers le laser (400).

4. Dispositif d'étalonnage (600) selon la revendication 3, dans lequel le diaphragme (300) est pourvu d'une fente de diaphragme en forme de bande (3222), configurée pour commander le passage du faisceau laser à travers le diaphragme (300).

5. Dispositif d'étalonnage (600) selon la revendication 4, dans lequel le diaphragme (300) comprend une base de fixation (310) et un diaphragme coulissant (320), le diaphragme coulissant (320) étant pourvu de la fente de diaphragme (300) et étant monté sur la base de fixation (310), et les positions du diaphragme coulissant (320) et de la base de fixation (310) étant réglables.

6. Dispositif d'étalonnage (600) selon la revendication 5, dans lequel la base de fixation (310) comprend une base (312), un support de fixation (314) et une poignée de verrouillage (316) ;
une extrémité du support de fixation (314) est montée sur la base (312), le support de fixation (314) ayant une forme de bande, et la poignée de verrouillage (316) étant montée sur le support de fixation (314) ;
le diaphragme coulissant (320) comprend une partie de diaphragme (322) et une partie de fente coulissante (324) ; et
la partie de diaphragme (322) a une forme de panneau et est pourvue de la fente de diaphragme (3222), la partie de fente coulissante (324) est montée sur la partie de diaphragme (322), a une forme de bande et est manchonnée de manière mobile dans le support de fixation (314), la partie de fente coulissante (324) est pourvue d'une rainure en forme de bande (3240), et la poignée de verrouillage (316) traverse la rainure (3240) et est configurée pour fixer le diaphragme coulissant (320) à la base de fixation (310).

7. Dispositif d'étalonnage (600) selon la revendication 1, dans lequel le laser (400) comprend une partie émettrice (410), un arbre de montage (420) et une cible d'observation (430) ;
la partie émettrice (410) est configurée pour émettre le faisceau laser ;
l'arbre de montage (420) est monté sur la partie émettrice (410) et est configuré pour monter le laser (400) sur un moyeu de roue de l'automobile (700) ; et
la cible d'observation (430) est montée sur la partie émettrice (410), la cible d'observation (430) comprenant une surface de cible d'observation (4300) configurée pour afficher la position du faisceau laser réfléchi par le réflecteur (200), et un trou d'émission (4302) étant situé au niveau d'une partie centrale de la surface de cible d'observation (4300).

8. Dispositif d'étalonnage (600) selon la revendication 3, dans lequel le dispositif de support (100) comprend :
un ensemble de support (10) ; et
un ensemble de poutre (20), dans lequel l'ensemble de poutre (20) est monté sur l'ensemble de support (10) et est mobile dans une direction verticale par rapport à l'ensemble de support (10), l'ensemble de poutre (20) comprenant le rail de guidage (202), le rail de guidage (202) étant disposé horizontalement.

9. Dispositif d'étalonnage (600) selon la revendication 8, dans lequel l'ensemble de support (10) comprend un corps de support (110) et des éléments de réglage de hauteur (114), dans lequel
au moins trois éléments de réglage de hauteur (114) sont montés sur une surface inférieure (1110) du corps de support (110), les au moins trois éléments de réglage de hauteur (114) étant configurés pour ajuster un angle horizontal global du corps de support (110) et un angle d'inclinaison du corps de support (110).

10. Dispositif d'étalonnage (600) selon la revendication 9, dans lequel il y a trois éléments de réglage de hauteur (114), les trois éléments de réglage de hauteur (114) étant répartis dans un triangle isocèle et étant configurés pour régler l'angle horizontal global du corps de support (110) en coopération, et un élément de réglage de hauteur (114) situé à la position du sommet de l'angle de sommet du triangle isocèle étant configuré pour régler l'angle d'inclinaison du corps de support (110).

11. Dispositif d'étalonnage (600) selon la revendication 9, dans lequel l'ensemble de support (10) comprend un support de base (11) et un support vertical (12), une extrémité du support vertical (12) étant reliée au support de base (11), et le support de base (11) supportant le support vertical (12) ;
l'ensemble de poutre (20) est monté sur le support vertical (12) ;
le support de base (11) comprend des roues pivotantes (112), le corps de support (110) et les éléments de réglage de hauteur (114) ; et
au moins trois roues pivotantes (112) sont montées sur la surface inférieure (1110) du corps de support (110) et sont configurées pour faciliter le mouvement du support de base (11).

12. Dispositif d'étalonnage (600) selon la revendication 11, dans lequel le support vertical (12) comprend une tige filetée de levage (122) ;
la tige filetée de levage (122) est disposée dans une direction verticale ; et
l'ensemble de poutre (20) est manchonné sur la tige filetée de levage (122) et s'adapte aux filets de la tige filetée de levage (122), lorsqu'elle tourne autour de l'axe central de la tige filetée de levage (122), la tige filetée de levage (122) étant capable d'entraîner l'ensemble de poutre (20) à se déplacer le long de la tige filetée de levage (122) dans une direction verticale.

13. Dispositif d'étalonnage (600) selon la revendication 12, dans lequel le support vertical (12) comprend un rail de guidage de levage (202) ;
le rail de guidage de levage (202) comprend une barre verticale (1200), la barre verticale (1200) étant disposée dans une direction verticale ; et
l'ensemble de poutre (20) est monté mobile sur la barre verticale (1200), la barre verticale (1200) étant configurée pour guider l'ensemble de poutre (20) afin qu'elle se déplace dans une direction verticale.

14. Dispositif d'étalonnage (600) selon la revendication 13, dans lequel le rail de guidage de levage (202) comprend une barre transversale (1202), la barre transversale (1202) étant montée sur la barre verticale (1200) dans une direction horizontale ; et
une extrémité de la tige filetée de levage (122) est montée sur la barre transversale (1202) et l'autre extrémité de la tige filetée de levage (122) est montée sur le corps de support (110).

15. Dispositif d'étalonnage (600) selon la revendication 13, dans lequel le rail de guidage de levage (202) comprend une barre transversale (1202) et une barre inférieure (1204) ;
deux barres verticales (1200) sont disposées parallèlement à un intervalle dans une direction verticale ;
la barre transversale (1202) est disposée dans une direction horizontale, les deux extrémités de celle-ci étant respectivement montées sur les deux barres verticales (1200) ;
la barre inférieure (1204) est montée de manière fixe sur le corps de support (110), une extrémité, éloignée de la barre transversale (1202), de chaque barre verticale (1200) étant montée de manière fixe sur la barre inférieure (1204) ; et
une extrémité de la tige filetée de levage (122) est montée de manière fixe sur la barre transversale (1202) et l'autre extrémité de la tige filetée de levage (122) est montée de manière fixe sur la barre inférieure (1204).
